# EUROPÄISCHE PATENTANMELDUNG

(11) **EP 0 999 119 A2**
(43) Veröffentlichungstag der Anmeldung: **10.05.2000**
(21) Anmeldenummer: 99120123.7
(22) Anmeldetag: 08.10.1999
(51) Int. Cl.: B62D 29/00

(54) **Rahmen- oder Säulen-Hohlstrukturteil einer Fahrzeugkarosserie**

(30) Priorität: 02.11.1998 DE 19850372
(71) Anmelder: Bayerische Motoren Werke Aktiengesellschaft, 80809 München (DE)
(72) Erfinder: Budweiser, Friedrich, 86672 Thierhaupten (DE); Bödigheimer, Reimund, 85391 Allerhausen (DE); Seibt, Klaus, 85764 Oberschleissheim (DE)

(57) **Zusammenfassung**

Die Erfindung betrifft ein Rahmen- oder Säulen-Hohlstrukturteil (1) einer Fahrzeugkarosserie, dessen Hohlraum zumindest abschnittsweise mit einer vorzugsweise schalldämmend wirkenden Kunststoff-Schaumstruktur (2) ausgefüllt ist, in welcher ein Führungskanal (3) vorgesehen ist. Insbesondere handelt es sich beim Führungskanal (3) um einen Wasser-Ableitkanal und bei der Kunststoff-Schaumstruktur um eine nicht-wasseraufnehmende Struktur. Bevorzugt wird dieser Führungskanal durch die Kunststoff-Schaumstruktur (2) begrenzt und wird beim Herstellen derselben durch einen am Ende des Herstellprozesses entfernbaren Kern (5) erzeugt.

## Beschreibung

Die Erfindung betrifft ein Rahmen- oder Säulen-Hohlstrukturteil einer Fahrzeugkarosserie, dessen Hohlraum zumindest abschnittsweise mit einer vorzugsweise schalldämmend wirkenden Kunststoff-Schaumstruktur ausgefüllt ist. Zum technischen Umfeld wird lediglich beispielshalber auf die DE 42 27 393 A1 verwiesen.

In der genannten Schrift ist ein hohles Trägerteil einer Fahrzeug-Karosserie gezeigt, dessen Hohlraum teilweise mit einem Leichtstoffkern ausgefüllt ist, der das Crashverhalten des Fahrzeuges verbessern soll. Weiterhin ist es bekannt, Hohlräume von Fahrzeug-Strukturteilen auszuschäumen, um eine Korrosion von innen her zu verhindern. Schließlich werden Rahmen- oder Säulen-Hohlstrukturteile einer Fahrzeugkarosserie auch mit einer ggf. vorgefertigten, geeignet geformten Kunststoff-Schaumstruktur ausgefüllt, die dann insbesondere schalldämmend wirken soll.

Teilweise bilden Rahmen- oder Säulen-Hohlstrukturteile einer Fahrzeugkarosserie auch Kanäle, bspw. für die Aufnahme von elektrischen Leitungen oder für die gezielte Ableitung von Wasser. Für den letztgenannten Anwendungsfall werden auch spezielle Wasserleitungsstücke in Rahmen- oder Säulen-Hohlstrukturteile einer Fahrzeugkarosserie eingesetzt, wozu lediglich beispielshalber auf die DE 38 01 812 C2 verwiesen wird.

Im Rahmen dieses geschilderten technischen Umfeldes an einem Rahmen- oder Säulen-Hohlstrukturteil einer Fahrzeugkarosserie nach dem Oberbegriff des Anspruchs 1 Verbesserungen aufzuzeigen, ist Aufgabe der vorliegenden Erfindung.
Die Lösung dieser Aufgabe ist dadurch gekennzeichnet, daß in der Kunststoff-Schaumstruktur ein Führungskanal vorgesehen ist. Insbesondere handelt es sich bei diesem um einen Wasser-Ableitkanal und bei der Kunststoff-Schaumstruktur um eine nicht-wasseraufnehmende Struktur, so daß es möglich ist, den Führungskanal direkt durch die Kunststoff-Schaumstruktur zu begrenzen. Bevorzugt wird dann beim Herstellen der Kunststoff-Schaumstruktur der Führungskanal durch einen am Ende des Herstellprozesses entfernbaren Kern erzeugt.

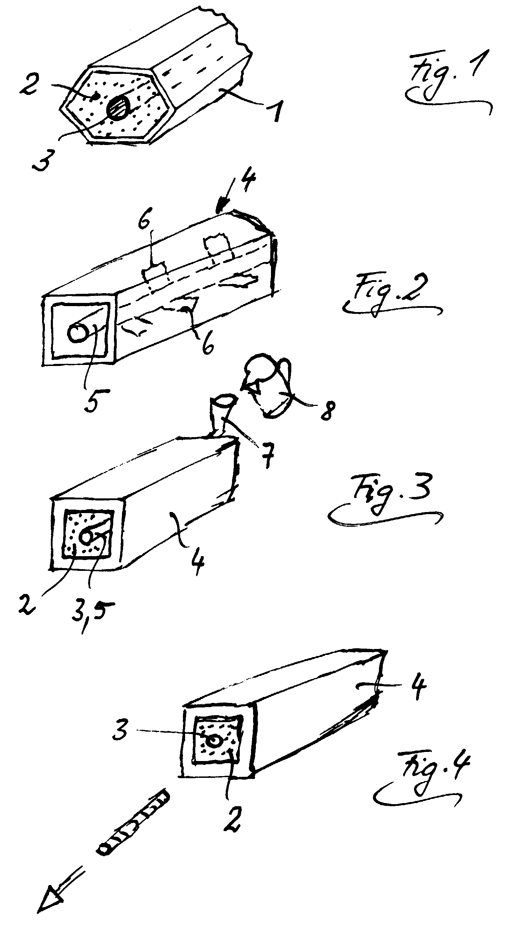

Näher erläutert wird die Erfindung anhand eines bevorzugten Ausführungsbeispieles, wobei in der beigefügten Figur 1 ein erfindungsgemäßes Hohlstrukturteil einer Fahrzeugkarosserie vereinfacht perspektivisch dargestellt ist, während anhand der Figuren 2 - 4 kurz der Herstellprozess für eine erfindungsgemäße in das Hohlstrukturteil einsetzbare Kunststoff-Schaumstruktur dargestellt ist.

In Figur 1 ist mit der Bezugsziffer 1 ein hier säulenförmiges und bspw. als A-Säule einer Personenkraftwagen-Karosserie zum Einsatz kommendes Hohlstrukturteil bezeichnet. Der innerhalb dieses Hohlstrukturteiles 1 liegende (und sich längs desselben erstreckende) Hohlraum ist zumindest abschnittsweise mit einer Kunststoff-Schaumstruktur 2 ausgefüllt, welche als separat gefertigtes Bauteil vorzugsweise zur Schalldämmung in den Hohlraum des Hohlstrukturteiles 1 eingesetzt ist.

In dieser Kunststoff-Schaumstruktur 2 ist ein sich längs derselben und somit in Längsrichtung des hier säulenförmigen Hohlstrukturteiles 1 erstreckender Führungskanal 3 vorgesehen. Bevorzugt handelt es sich bei diesem um einen Wasser-Abkeitkanal, d.h. durch diesen Führungskanal 3 kann Wasser bspw. vom Dach des Fahrzeuges durch das Hohlstrukturteil 1 (d.h. bspw. durch die A-Säule der PKW-Karosserie) zu dessen (bzw. deren) Bodenplattform geleitet werden.

Der Führungskanal 3 ist dabei direkt in die Kunststoff-Schaumstruktur 2 integriert, d.h. der Führungskanal 3 wird durch die Kunststoff-Schaumstruktur 2 selbst begrenzt. Daher ist es vorteilhafterweise nicht erforderlich, ein eigenständiges Leitungsteilstück für diesen Führungskanal in das Hohlstrukturteil 1 bzw. in die Kunststoff-Schaumstruktur 2 einzusetzen. Damit das im Führungskanal 3 geführte Wasser nicht in die Kunststoff-Schaumstruktur 2 eindringt, sollte letztere nicht-wasseraufnehmend ausgebildet sein, d.h. es sollte sich bevorzugt um eine geschlossenporige Schaumstruktur handeln.

Hergestellt werden kann eine derartige Kunststoff-Schaumstruktur 2 wie in den Figuren 2 - 4 dargestellt:
In eine geeignete, die Außengeometrie der herzustellenden Kunststoff-Schaumstruktur 2 bestimmende Form 4 (diese ist bevorzugt teilbar, was hier der Einfachheit halber nicht dargestellt ist) wird zunächst ein den (späteren) Führungskanal 3 definierender Kern 5 eingelegt. Dieser Kern 5 wird durch Kernstützen 6 in der Form 4 wie gewünscht (bevorzugt zentral) gehalten (vgl. Fig.2).
Gemäß Fig.3 erfolgt anschließend das Befüllen der Form 4 mit dem die Kunststoff-Schaumstruktur 2 bildenden Kunststoff-Material über einen Angußtrichter 7, wobei dieser Verfahrensschritt hier schematisch durch eine Befüllkanne 8 symbolisiert ist. Danach erfolgt der eigentliche Schäumvorgang, d.h. die Kunststoff-Schaumstruktur 2 wird gebildet und ausgehärtet.

Anschließend wird der den Führungskanal 3 in der Kunststoff-Schaumstruktur 2 bildende Kern 5 entfernt, d.h. aus der Kunststoff-Schaumstruktur 2 herausgezogen, so wie dies schematisch in Fig.4 dargestellt ist.

Selbstverständlich kann anstelle dieses entfernbaren Kernes 5 auch ein sog. verlorener Kern zum Einsatz kommen, darüber hinaus können selbstverständlich eine Vielzahl weiterer Details insbesondere konstruktiver Art durchaus abweichend vom gezeigten Ausführungsbeispiel gestaltet sein, ohne den Inhalt der Patentansprüche zu verlassen.
Stets erhält man ein äußerst einfaches Rahmen- oder Säulen-Hohlstrukturteil 1 einer Fahrzeugkarosserie, das neben der eigentlich Strukturteil-Funktion eine weitere Funktion, nämlich die Aufnahme des Führungskanales 3 übernimmt, und welches aufgrund der Kunststoff-Schaumstruktur 2 gleichzeitig bspw. schalldämmend wirkt. Dabei sind für den Führungskanal 3 keine weiteren Zusatzteile erforderlich, was sich qualitätssteigernd auswirkt und wodurch Fehler sowie weitere Nachteile vermieden werden. Vorteilhafterweise ist dabei der Führungskanal 3 nahezu beliebig dimensionierbar und kann dabei - insbesondere gegenüber separat eingesetzten Leitungsstücken - von relativ großem Durchmesser sein.

### Bezugszeichenliste:

- 1: Hohlstrukturteil
- 2: Kunststoff-Schaumstruktur
- 3: Führungskanal
- 4: Form
- 5: Kern
- 6: Kernstütze
- 7: Angußtrichter
- 8: Befüllkanne

## Patentansprüche

1. Rahmen- oder Säulen-Hohlstrukturteil (1) einer Fahrzeugkarosserie, dessen Hohlraum zumindest abschnittsweise mit einer vorzugsweise schalldämmend wirkenden Kunststoff-Schaumstruktur (2) ausgefüllt ist, in welcher ein Führungskanal (3) vorgesehen ist.

2. Rahmen- oder Säulen-Hohlstrukturteil nach Anspruch 1, dadurch gekennzeichnet, daß es sich beim Führungskanal (3) um einen Wasser-Ableitkanal und bei der Kunststoff-Schaumstruktur (2) um eine nicht-wasseraufnehmende Struktur handelt.

3. Rahmen- oder Säulen-Hohlstrukturteil nach Anspruch 1 oder 2, dadurch gekennzeichnet, daß der Führungskanal (3) durch die Kunststoff-Schaumstruktur (2) begrenzt wird und beim Herstellen derselben durch einen am Ende des Herstellprozesses entfernbaren Kern (5) erzeugt wird.
